(19) Europäisches Patentamt

European Patent Office

Office européen des brevets

(11) **EP 1 338 388 A2**

(12) **EUROPEAN PATENT APPLICATION**

(43) Date of publication:
27.08.2003 Bulletin 2003/35

(51) Int Cl.7: **B25J 17/02**

(21) Application number: 03002692.6

(22) Date of filing: 12.02.2003

| | |
|---|---|
| (84) Designated Contracting States:<br>**AT BE BG CH CY CZ DE DK EE ES FI FR GB GR<br>HU IE IT LI LU MC NL PT SE SI SK TR**<br>Designated Extension States:<br>**AL LT LV MK RO**<br><br>(30) Priority: **19.02.2002 JP 2002042153<br>26.03.2002 JP 2002085746**<br><br>(71) Applicant: **Sankyo Oilless Industry, Inc.<br>Tokyo 183-0036 (JP)**<br><br>(72) Inventors:<br>• **Irie, Rinzo<br>Fuchu-shi, Tokyo, 183-0032 (JP)** | • **Kase, Ryoji<br>Tsukui-gun, Kanagawa, 220-0203 (JP)**<br>• **Nakayama, Hajime<br>Fuchu-shi, Tokyo, 183-0005 (JP)**<br>• **Suzuki, Minoru<br>Sagamihara-shi, Kanagawa, 229-0016 (JP)**<br>• **Terada, Hidetsugu<br>Kofu-shi, Yamanashi, 400-0016 (JP)**<br><br>(74) Representative: **VOSSIUS & PARTNER<br>Siebertstrasse 4<br>81675 München (DE)** |

(54) **Rotatable-and-swingable type of rotary joint device**

(57)    Disclosed is a rotatable-and-swingable type of rotary joint device according to the present invention comprises at least an input shaft (3) rotatably fixed to the casing (2) of the device, a precession spherical body (4) responsive to the rotation of the input shaft (3) for rotating and swinging, and an output shaft (8) operatively connected to the precession spherical body (4) for rotating. This arrangement permits the crossing of the input (3) and output (8) shafts to change freely within certain angular limits, thereby substantially increasing the versatility of designing, and contributing to the down-sizing of the drive transmission.

Fig. 1

**Description**

The present invention relates to a rotary joint device for transmitting the driving force from the input shaft to the output shaft with the input and out put shafts crossing at such an increased angle that the off-set amount appearing in the driving mechanism for instance, in the arms of an industrial robot may be reduced, thereby permitting transmission of the force as in the arm or leg joints of human beings or animals. Advantageously the substantial reduction of the offset amount permits the downsizing of the joint parts of the industrial robot.

Orthogonal speed reduction devices include bevel gears, hypoid gears, hyperboloidal gears, worm-and-worm wheels and pin gears. These may be used alone as speed-reduction means, or may be used in combination with ordinary coaxial speed-reduction units. These speed reduction devices have been widely used in industrial robots and other machines. Rotatable-and-swingable (precession) type of constant-speed joint mechanisms having their input and output shafts crossing at an orthogonal or other crossing angle have been proposed, but they are not practically used as speed-reduction devices.

As for a transmission having two bevel gears arranged with their shafts crossing at an orthogonal or oblique angle the speed reduction can be determined as a ratio of the number of the teeth on its output side to that of the teeth on its input side, and therefore, an increased speed-reduction ratio necessitates use of increased size of the output bevel gear, and accordingly an increased installation space is required. As a matter of fact, the number of the teeth meshing between the input and output bevel gears all the time is small, and the meshing is located apart from their shafts. These induce some play between the meshing bevel gears, and undesired bending of shafts is caused. As a result inaccuracies appear in rotating or positioning associated objects, and significant rattle is produced in operation.

As for the hypoid gear or hyperboloidal gear its tooth-meshing condition has been improved, thus reducing the noise significantly. Their shafts, however, do not cross, requiring a relatively large installation space. As for the worm-and-worm wheels their meshing condition has been improved, and they can provide an increased reduction ratio. Disadvantageously their shafts do not cross, and accordingly a relatively large installation space is required. Swingable-and -rotatable, speed-constant, orthogonal or crossing joint mechanisms have been proposed, but they cannot be used as speed-reduction units.

In view of the above one object of the present invention is to provide a rotatable-and-swingable type of rotary joint device guaranteed to be free of such defects as described above.

To attain this object a rotatable-and-swingable type of rotary joint device according to the present invention comprises at least an input shaft rotatably fixed to the casing of the device, a precession spherical body responsive to the rotation of the input shaft for rotating and swinging (precession motion), and an output shaft operatively connected to the precession spherical body for rotating.

This arrangement permits the crossing of the input and output shafts to change freely within certain angular limits, thereby substantially increasing the versatility of designing, and contributing to the down-sizing of the drive transmission.

The rotatable-and-swingable type of rotary joint device may further comprises a stationary input guide block operatively connected to and supporting the precession spherical body, a precession output intervenient member operatively connected to the precession spherical body, a stationary output guide block operatively connected to and rotatably and swingably supporting the precession output intervenient member.

This arrangement permits the crossing of the input and output shafts to change freely within certain angular limits, and preventing the spinning of the spherical body about its swing axis by the stationary input and output guide blocks.

All of dimensions and variables are so determined that the input and output shafts may have one and same rotation angle. The input and output shafts may have their center axes crossing at a crossing angle $\alpha$, where $0° < \alpha \leq 110°$. One of the precession output intervenient member and precession spherical body may have circulatory grooves made therein, and the other may have recesses made therein in confronting relation with the circulatory grooves, and the output intervenient member may be operatively connected to the precession spherical body by small spherical bodies or balls rotating in the spaces defined between the circulatory grooves and the recesses. This arrangement assures that the spherical body moves smoothly. The input shaft and the input swing axle have their center axes crossing at a crossing angle $\beta$ where $0° < \beta \leq 20°$ whereas the output shaft and the output swing axle have their center axes crossing at a crossing angle $\gamma$ where $0° < \gamma \leq 20°$. As a matter of practice the rotary transmission device can work well within the angular limits. The crossing angle $\beta$ may be equal to or larger than the crossing angle $\gamma$ ($\beta \geq \gamma$). This angular requirement assures that the rotation can be transmitted from the input to output shaft smoothly. The precession spherical body may be sandwiched between the stationary input and output guide blocks under pressure. This has the effect of removing any backlash and noise in operation.

A rotatable-and-swingable type of speed-reduction device according to the present invention comprises an input shaft rotatably fixed to the casing of the device, a precession spherical body operatively connected to the input shaft via an associated input swing axle to be responsive to the rotation of the input shaft for rotating and swinging, a stationary input guide block operatively connected to and supporting the precession spherical body, a precession output intervenient member operatively connected to the precession spherical body, a stationary output guide block operatively connected to and rotatably and swingably supporting the output intervenient member, and an output shaft rotatably supported by the stationary output guide block, and operatively connected to the precession output intervenient member for rotation. This arrangement permits the crossing of the input and output shafts to change freely within certain angular limits, thereby substantially increasing the versatility of designing, and contributing to the down-sizing of the drive transmission.

The output shaft may have a three-dimensional continuous wave-like groove made in its lower surface to confront with counter recesses, which are made in the upper surface of the output intervenient member, thus making the output shaft mesh with the output intervenient member with balls retained between the wave-like groove and the counter recesses. This contributes to the downsizing of the drive transmission still more.

In the rotary joint device or speed-reduction device as described above deviation-free power transmission can be effected, and the backlash is limited by applying a pressure to the engagement place at which the precession spherical body and the output intervenient member meet together, thereby positioning and moving associated parts with precision and, at the same time, reducing the noise.

Other objects and advantages of the present invention will be understood from the following description of some rotary joint and speed-reduction devices according to the present invention, which are shown in.

Fig.1 is a front view of a rotatable-and-swingable type of rotary joint device 1 according to a first embodiment of the present invention, the right half being shown in section;

Figs.2(A) and 2(B) are side and front views of the stationery input guide block 5 of the rotary joint device 1, the side view being given in section;

Fig.3 shows the loci "b" of the balls 9 used in the rotary joint device 1, which projected on the Y-Z plane;

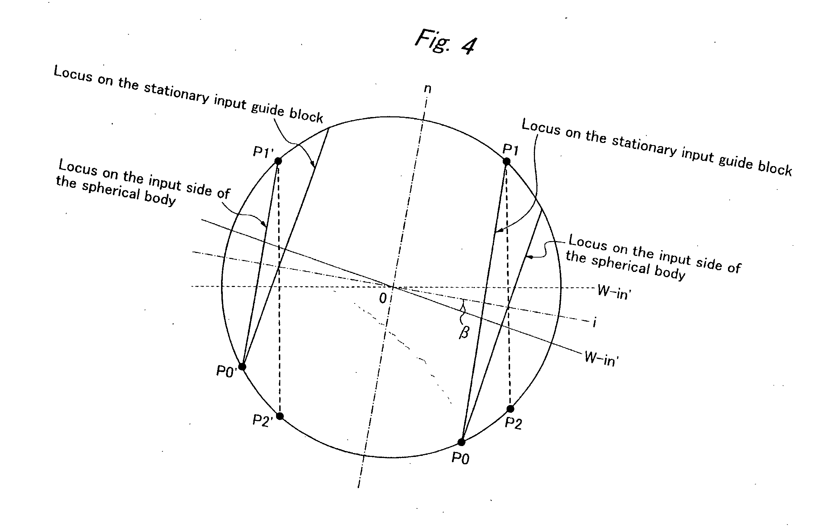

Fig.4 shows the locus drawn by a selected ball 9, starting from its initial position $P_0$ while the input shaft 3 is rotated about its center axis "i", thereby rotating the input swing axle 4a about its center axis "W-in";

Figs.5(A), (B) and (C) are front, bottom and side (partly in section) views of the stationary guide block 7 of the rotary joint device 1;

Figs.6(A), (B) and (C) are front, side (partly in section) and rear views of the precession output intervenient member 6;

Fig.7 shows the loci of the centers of the balls 11 projected on the X-Y plane, which are confined between output intervenient member 6 and the stationary output guide block in the rotary joint device 1;

Figs.8(A) and 8(B) are front and side views of the precession spherical body 4;

Fig.9 shows the loci of the centers of the balls 10 in the circulatory grooves 4c of the spherical body 4, which projected on the X-Y plane;

Figs.10(A), (B) and (C) show in cross section, the different shapes of the circulatory groove;

Fig.11 shows the initial positions of the balls 10, the loci of the circulatory grooves and the virtual loci projected on the X-Y plane in case that the circulatory grooves 4c and the confronting ball pockets 6b are reversed in position in Fig.1;

Fig.12 is a front view of a rotary joint device having its input and output shafts crossing at 110 degrees;

Fig.13 is a front view of a rotatable-and-swingable type of rotary joint device 1 according to a second embodiment of the present invention, shown partly in section;

Figs.14(A), (B) and (C) are front, side (partly in section) and rear views of the ball retainer 6;

Fig.15 shows the loci "c" of the balls 11 projected on the X-Y plane, which are confined between the recess 7a of the stationary output guide block 7 and the ball pockets 6b of the ball retainer 6 in the speed-reduction device 1 of Fig.13;

Fig.16 shows the loci "f" of the centers of the balls 10 projected on the X-Y plane, which are confined between the circulatory grooves 4c of the spherical body 4 and the ball pockets 6b of the ball retainer 6 in the speed-reduction device 1 of Fig.13;

Figs.17(A) and (B) are side (partly in section) and bottom views of the output shaft;

Fig.18 shows the loci "h" of the centers of the balls in the wavy groove 8c of the output shaft 8 in the speed-reduction device 1, which projected on the X-Y plane;

Fig.19 illustrates how the loci "h" of the centers of the balls 12 in the wavy groove 8c of the output shaft 8 in the speed-reduction device 1, which projected on the X-Y plane; and

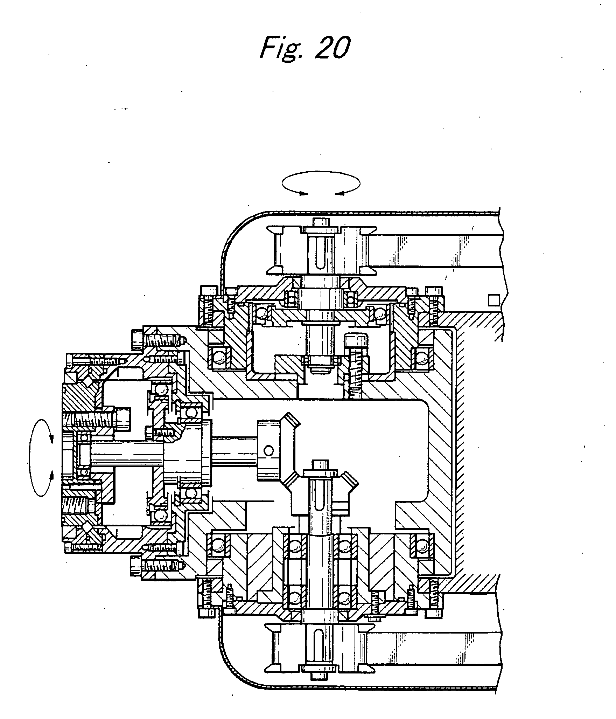

Fig.20 shows a conventional rotary transmission device.

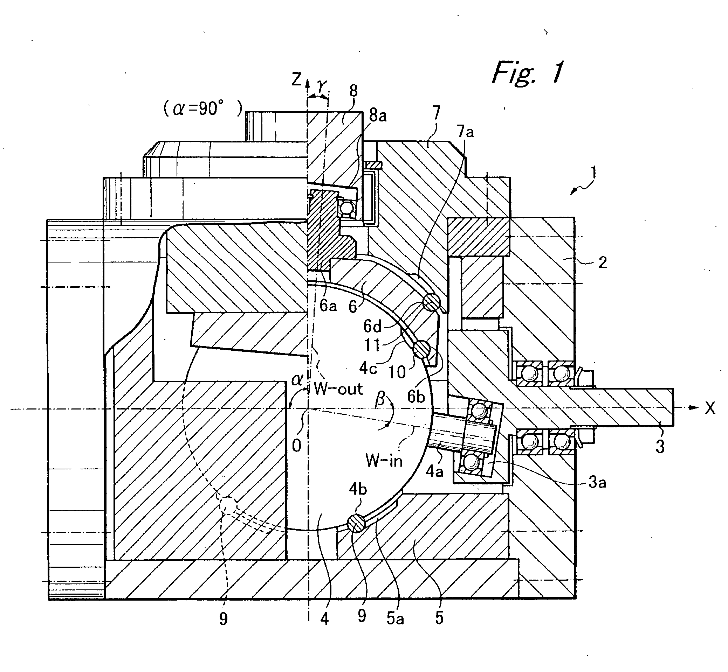

Referring to Fig.1, a rotatable-and-swingable type of rotary joint device 1 comprises an input shaft 3 rotatably fixed to a casing 2 of the device 1, a precession spherical body 4 operatively connected to the input shaft 3 via an associated input swing axle 4a to be responsive to the rotation of the input shaft for rotating and swinging (precession motion), a stationary input guide block 5 operatively connected to and supporting the precession spherical body 4, a precession output intervenient member 6 operatively connected to the precession spherical body 4, a stationary output guide block 7 operatively connected to and rotatably and swingably supporting the output intervenient member 6, and an output shaft 8 rotatably connected to an associated output swing axle 6a, which projects from the output intervenient member 6.

The center axis "i" (X-axial direction) of the input shaft 3 crosses the center axis "n" (Z-axial direction) at a selected crossing angle $\alpha$.

The input shaft 3 can rotate in the bearing, which is fixed to the casing 2 of the rotary joint device 1. The input shaft 3 has a bearing recess 3a made to be inclined at an oblique angle $\beta$ ($0° < \beta \leq 20°$) relative to the center axis "i" of the input shaft 3. The input swing axle 4a projects from the precession spherical body 4 into the bearing, which is press-fitted in the bearing recess 3a with its center axis "W-in" inclined at the crossing angle $\beta$. The center axis "W-in" of the input swing axle 4a passes through the center O of the spherical body 4.

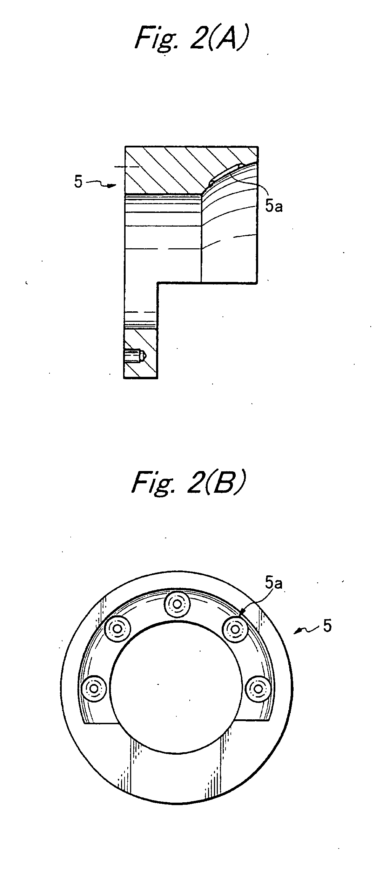

The spherical body 4 is supported by the stationary input guide block 5. As shown in Figs.1 and 2, the spherical body 4 has a plurality of ball pockets 4b made on its surface, and balls 9 are rotatably fitted in the ball pocket. The stationary input guide block 5 has a plurality of circulatory grooves 5a made on its surface. In this particular example, ten ball pockets 4b and ten circulatory grooves 5a are made on the spherical body 4 and stationary input guide block 5 respectively.

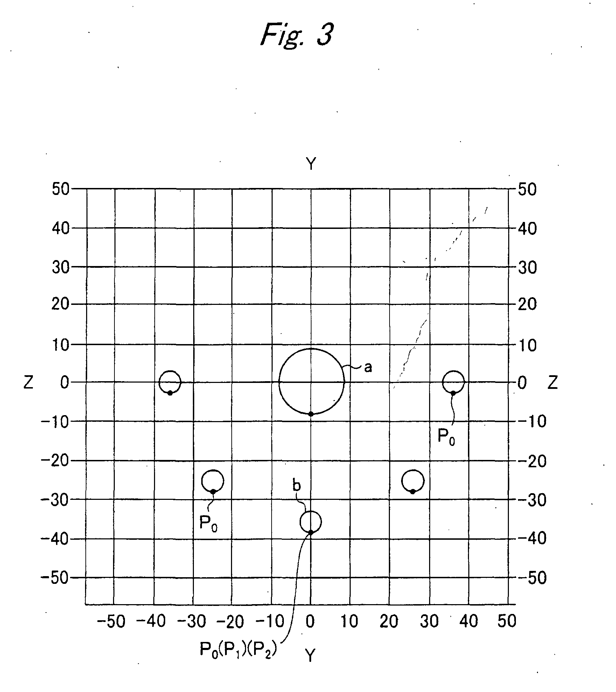

The manner in which the ball pockets 4b and circulatory grooves 5a are connected via the balls 9 is described below. Fig.3 shows the initial positions $P_0$ (black points) set for the balls 9 in respect of their centers and the loci "b" followed by their centers. The locus "a" at the center of the drawing is given by plotting the set of sequential positions taken by a selected point of the input swing axle 4a while the input shaft 3 rotates.

These ball center loci "b" are drawn when the input shaft 3 rotates with the input swing axle 4a inclined a crossing angle (or swinging angle) $\beta$ ($0° < \beta \leq 20°$), and each locus can be given by the following equations:

$$P_1 = P_0 \cdot E^{i \cdot \theta} \qquad \text{Equation 1}$$

$$P_2 = P_1 \cdot E^{\text{W-in}(-\theta)} \qquad \text{Equation 2}$$

, where $\theta$ stands for the angle of the rotation of the input shaft 3; $P_0$ stands for a given initial position set for the center of a ball 9; $P_1$ stands for the position taken by the center of the ball 9 after the input shaft 3 rotates $\theta$; $P_2$ stands for the position given by coordinate-conversion in respect of the center axis "W-in" of the input swing axle 4a; and E stands for conversion matrix in respect of the rotation $\theta$ of the input shaft 3 about its center axis "i".

The required circulatory groove 5a and ball pocket 4b can be formed by making a cutting tool of same shape as the ball 9 follow the locus "b" on the stationary input guide block 5 and the spherical body 4 respectively. The crossing angle $\beta$ can be selected in the range of $0° < \beta \leq 20°$. In the example above described the crossing angle is 10 degrees.

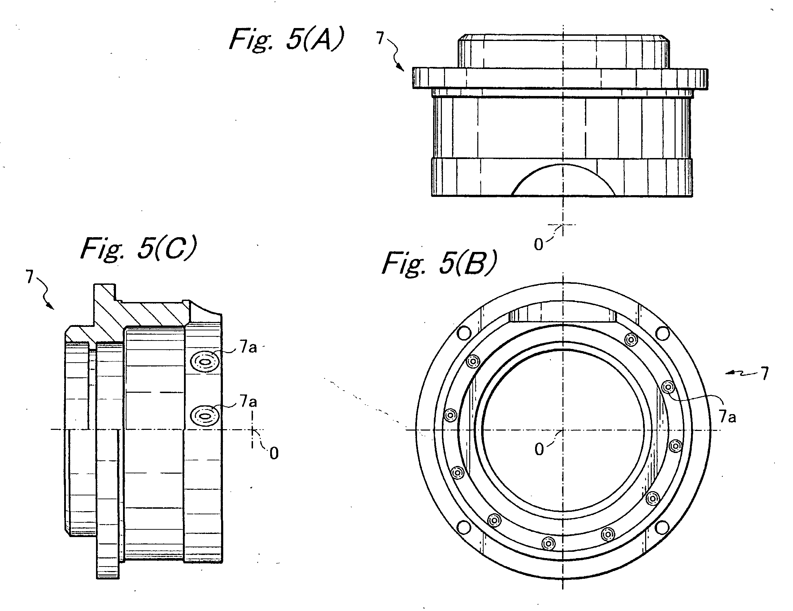

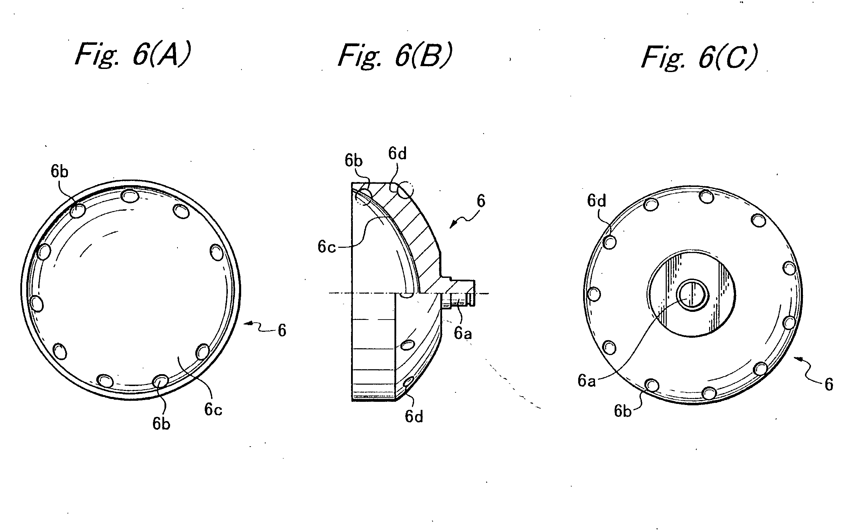

Next, it is described how the locus followed by each ball 11 can be determined. The balls 11 support the spherical body 4 via the output intervenient member 6 (called "ball retainer", too) and associated balls 10, which are rotatably fitted in the ball pockets 6d (see Fig. 6c) made on the outer surface of the output intervenient member 6. The positional relation between the balls 11, the circulatory grooves 7a (see Fig.5) and the ball pockets 6d (see Fig.6c) as viewed from the output shaft 8 is similar to the positional relation between the balls 9, the circulatory grooves 5a and the ball pockets 4b as viewed from the input shaft 3, and therefore, the locus followed by each ball 11 can be determined in the same way as the locus "b" followed by each ball 9.

As seen from Fig.1, the output shaft 8 is rotatably fixed to the stationary output guide block 7, and the output shaft 8 has an oblique bearing recess 8a made therein, the center axis of the oblique bearing recess 8a crossing the center axis "n" of the output shaft 8 at a crossing angle $\gamma$ ($0° < \gamma \leq 20°$). An output swing axle 6a projects from the output intervenient member 6 so that it may be rotatably fitted in the oblique bearing recess 8a with its center axis "W-out" inclined at the crossing angle $\gamma$. The center axis "W-out" of the output swing axle 6a passes through the center O of the spherical body 4.

In determining the locus of the center of each ball 11, first, the initial position of the center of the ball 11 is determined arbitrarily to be $P_3$, and Equations 1 and 2 are rewritten by substituting the center axis "n" of the output shaft, the center axis "W-out" of the swing axle 6a and the crossing angle $\gamma$ for corresponding variables in these equations as follows:

$$P_0 \Rightarrow P_3$$
$$P_1 \Rightarrow P_4$$
$$P_2 \Rightarrow P_5$$
$$i \Rightarrow n$$
$$a \Rightarrow \gamma$$
$$\text{W-in} \Rightarrow \text{W-out}$$
$$\theta \Rightarrow \theta \text{ (in this example the rotation of the input shaft}$$
is equal to the rotation of the output shaft; the equi-speed transmission from the input to output shafts)

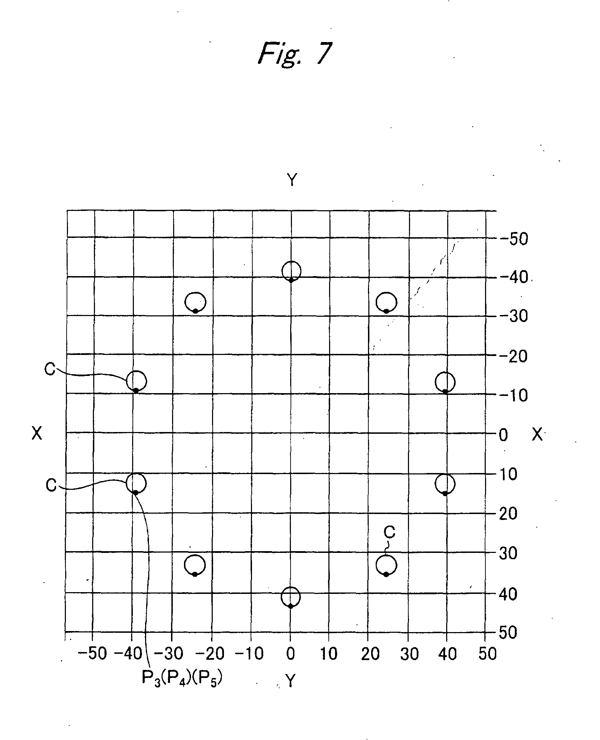

Fig.7 shows the loci "c" of the centers of the balls 11. The required circulatory grooves 7a and ball pockets 6d can be formed by making a cutting tool of same shape as the ball 11 follow the locus "c" on the stationary output guide block 7 and rotate on the output intervenient member 6 respectively. The crossing angle $\gamma$ can be selected in the range of $0° < \gamma \leq 20°$. In the example above described the crossing angle is 5 degrees.

In order to transmit the rotation of the spherical body 4 to the output shaft 8 smoothly the crossing angle β must be equal to, or larger than γ. As seen from Fig. 5, the number of the circulatory grooves 7a formed on the stationary output guide block 7 is eleven, and these circulatory grooves 7a are circumferentially arranged at regular intervals. Likewise, eleven ball pockets 6d are circumferentially arranged on the outer surface of the output intervenient member.

With this arrangement the spherical body 4 can be swingably supported without straying off its center O and without spinning about the center axis of the input swing axle 4a or output swing axle 6a.

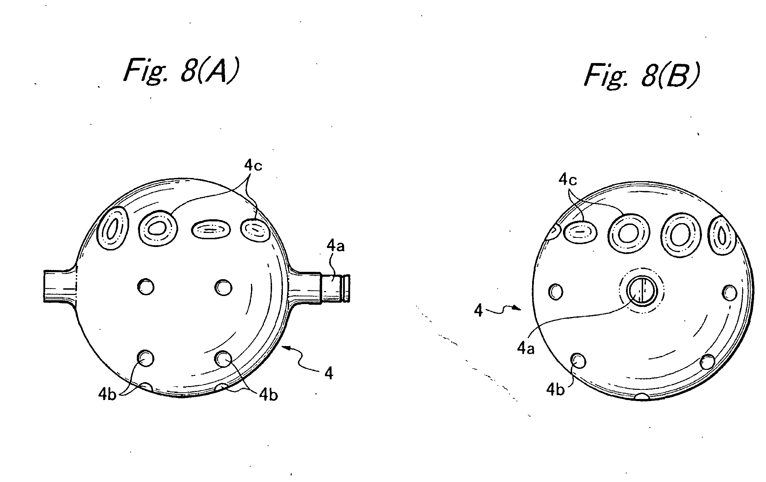

As seen from Fig.8, a plurality of circular, circulatory grooves 4c (ten grooves in this example) are formed on the upper part of the spherical body 4 for coupling the output intervenient member 6. As seen from Figs.6A and 6B, ten ball pockets 6d are formed on the inner surface 6c of the output intervenient member 6 in confronting relationship with the circulatory grooves 4c of the spherical body 4. As seen from Fig.1, the balls 10 are rotatably fitted in the spaces defined by the confronting ball pockets and the circulatory grooves 4c.

With this arrangement the rotation of the input shaft 3 can be transmitted to the output intervenient member 6 via the precession spherical body 4. The circulatory grooves 4c are circular in shape, but different in size. Movement of the spherical body 4 causes the output intervenient member 6 to swing and rotate via the balls 10 and circulatory grooves 4c.

The output swing axle 6a of the output intervenient member 6 has its center axis "W-out" deviated from the center axis "n" of the output shaft 8, thereby permitting transmission of the force from the spherical body 4 to the output shaft 8 like the crank motion to rotate the output shaft 8. If a single ball were used, a dead point would appear in the crank motion, and the output shaft 8 would stop its rotation at the dead point. To assure the continuous rotation of the output shaft 8 a plurality of balls and associated circulatory grooves are evenly distributed without interfering with each other.

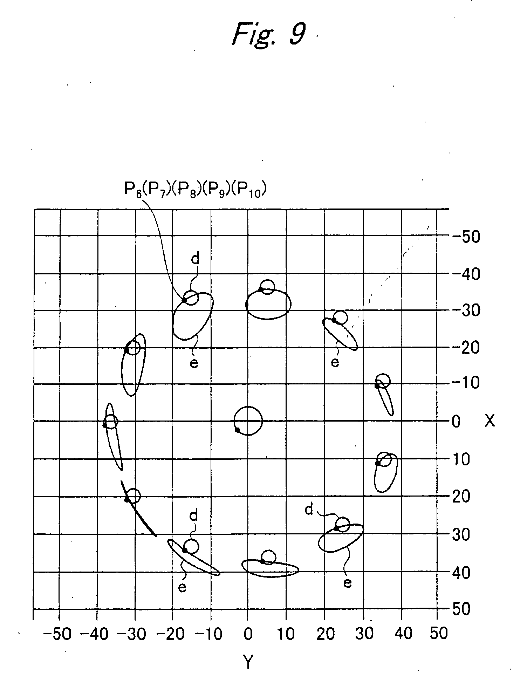

Fig.9 shows the initial positions $P_6$ of the balls 10 in respect of the circulatory grooves 4c of the spherical body 4, and the loci "e" followed by the centers of the balls 10 in the circulatory grooves 4c. The locus "e" can be determined in the same way as described above.

First, the initial position of the center of the ball 10 is determined arbitrarily to be $P_6$, and the position of the ball center for rotation θ about the center axis "n" is Position $P_7$, which position is coordinate-converted in respect of the center axis "W-out" of the output swing axle 6a to provide Position $P_8$. The locus "d" is circular, and is a virtual, intermediate locus, which does not actually appear in the product.

The circulatory groove 4c can be determined by subtracting the swinging motion of the input shaft 3 from the virtual, intermediate locus "d" to obtain the locus "e" of the center motion. As is described above, Position $P_8$ is coordinate-converted in respect of the center axis "W-in" of the input swing axle 4a to provide Position $P_9$, which is coordinate-converted in respect of the center axis "i" of the input shaft 3 to determine the locus "e".

When the input shaft 3 rotates θ, the input swing axle 4a rotates about the center axis "i" of the input shaft 3 with the center axis "W-in" of the input swing axle 4a passing through the center O of the spherical body 4 to swing and rotate the spherical body 4. Then, the output intervenient member 6 swings and rotates by the agency of the circular grooves 4c, balls 10 and ball pockets 6b. Then, the output swing axle 6a rotates about the center axis "n" of the output shaft 8 with the center axis "W-out" passing through the center "O" of the spherical body 4, thus making the output shaft 8 rotate θ about the output axis, which is perpendicular to the input axis, at the same speed as the input shaft 3.

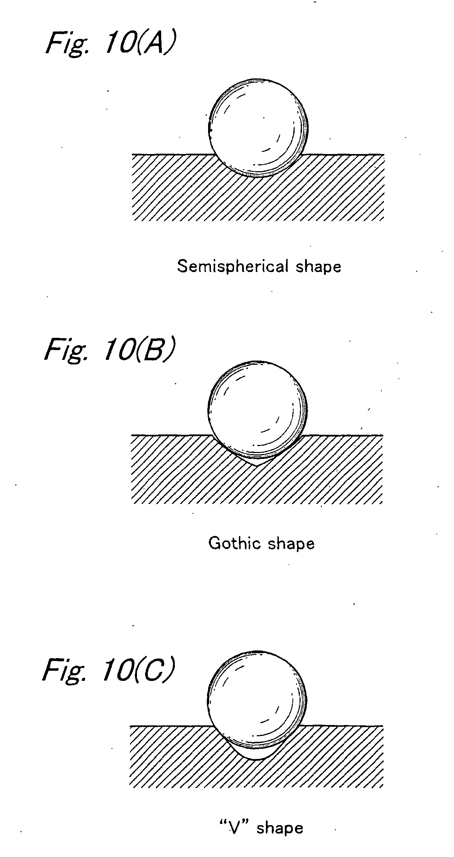

Referring to Figs.10 (A), (B) and (C), the ball pockets 4b, 6b and 6d, and the circulatory grooves 5a, 4c and 7a may be semicircular, Gothic or "V"-shaped in cross-section.

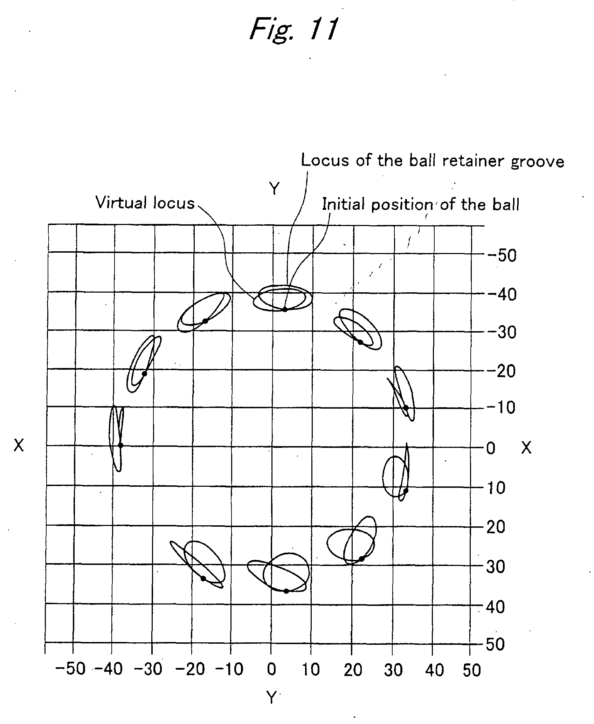

In the area in which the spherical body 4 confronts the overlying ball retainer 6, the circulatory grooves 4c may be formed on the inner surface of the ball retainer 6 in place of the ball pockets 6b, and the ball pockets 6b may be formed on the spherical body 4 in place of the circulatory grooves 4c, contrary to what is shown in Fig.1. This reversal is shown in respect of the initial positions of the balls 10, the loci of the circulatory grooves and the virtual loci in Fig.11.

The spherical body 4 can be pressed by inserting shims between the stationary output guide block 7 and the casing 2 of the rotary joint device 1 or by using springs or elastomer such as rubber.

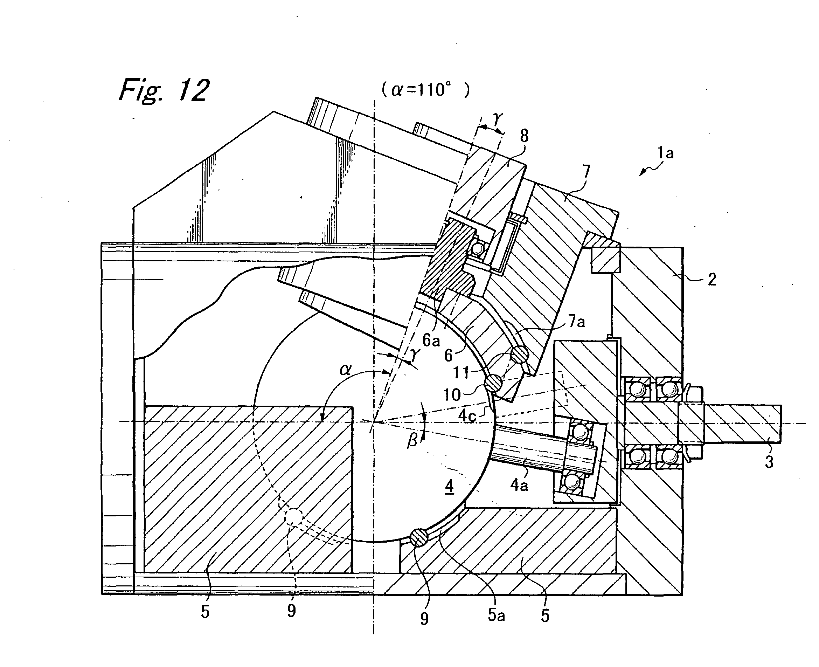

Referring to Fig.12, a rotary joint device 1a has its input and output shafts 3 and 8 crossing at such an increased critical angle, beyond which the input and output shafts 3 and 8 cannot come close to each other without allowing the output intervenient member 6 to interfere with the stationary output guide block 7. The critical crossing angle is equal to or smaller than 110 (a < 110°). Conversely in the range of crossing angle in which á is smaller than 70° (0° < α < 70°) the stationary input guide block 5 (on the left side in Fig.1), the output intervenient member 6 and the stationary output guide block 7 will interfere with each other. To avoid such interference the left stationary input guide block 5 needs to be removed from the casing 2 of the rotary joint device 1 a.

As may be understood from the above, the rotary joint device permits its input and output shafts to be adjusted in respect of the crossing angle. This facilitates installation of an industry robot in a limited space where transmission of the rotating drive is changed in direction. No backlash appears, improving the transmission efficiency accordingly, and producing no noise.

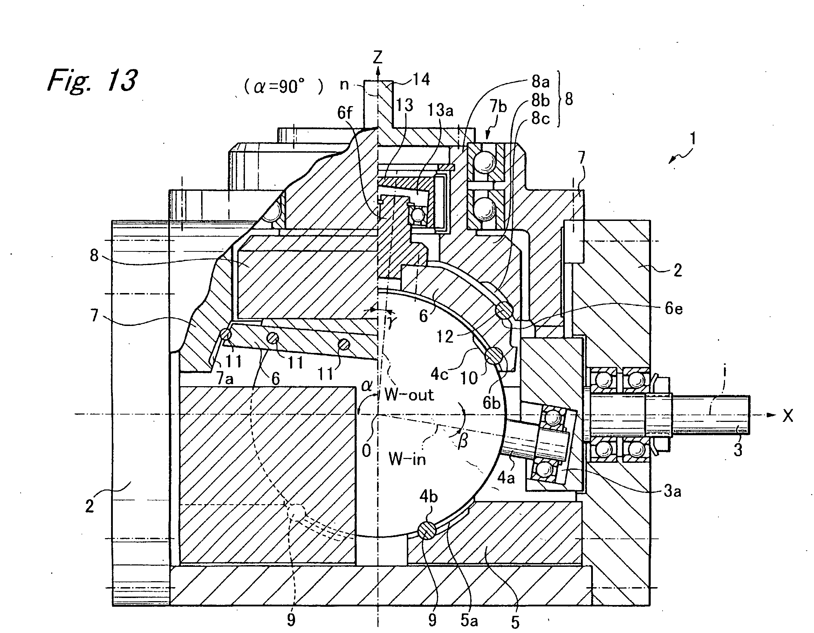

Referring to Fig.13, a rotary joint device 1 according to a second embodiment of the present invention comprises an input shaft 3 rotatably fixed to the casing 2 of the device 1, a precession spherical body 4 operatively connected to the input shaft 3 via an associated input swing axle 4a to be responsive to the rotation of the input shaft 3 for rotating and swinging, a stationary input guide block 5 operatively connected to and supporting the precession spherical body 4, a precession output intervenient member 6 operatively connected to the precession spherical body 4, a stationary output guide block 7 operatively connected to and rotatably and swingably supporting the output intervenient member 6, and an output shaft 8 rotatably connected to an associated output swing axle 6a, which projects from the output intervenient member 6.

The rotary joint device of Fig.13 is similar to that of Fig.1 both in structure and operation as far as the rotation is transmitted from the input shaft 3 to the output shaft 8 with the input and output shafts crossing at a selected angle $\alpha$, and therefore the description pertaining to the structure and operation is omitted.

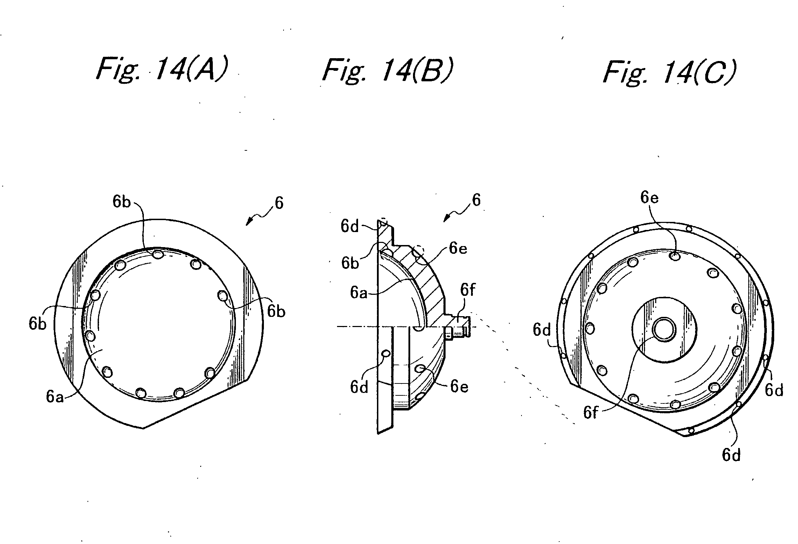

The locus of each ball 11, which supports the spherical body 4 along with the counter balls 10 on the other side of the output intervenient member 6, can be determined in the same way as the locus "b" of each ball 9; the relative arrangement between the balls 11, the associated circulatory grooves 7a (see Fig.5) of the stationary output guide block 7 and the ball pockets 6d of the output intervenient member or ball retainer 6 (see Figs.14B and C) as viewed from the Z-axis (or the output shaft 8) in Fig.13 is similar to the arrangement of the balls 9 and associated groove and recess relative to the input shaft 3.

In construction, the stationary output guide block 7 is cylindrical as a whole (see Fig.5), and is fixed to the casing 2 of the rotary device 1. To assure the precision transmission of the swinging-and-rotating motion of the ball retainer 6 to the output shaft 8 the circulatory grooves 7a (for example ten circulatory grooves) are made on the inner, lower oblique circumference of the stationary output guide block 7 in confronting relationship with the ball pockets 6d (see Fig.14).

As shown in Fig.14, the ball retainer 6 is circular arc in cross section, partly cut to avoid the collision which otherwise, would be caused against the input shaft 3. The ball retainer 6 has ten ball pockets 6b made on its inner concave surface 6a, ten ball pockets 6d made on its annular rim, and eleven ball pockets 6e made on its outer convex surface.

The ball retainer 6 has a swingable output axle 6f projecting from its center. As seen from Fig.13, a bearing cap 13 has a recess 13a defined therein. The center axis "W-out" of the recess 13a is inclined at a crossing angle $\gamma$ $(0° < \gamma \leq 20°)$ relative to the Z-axis or the center axis "n" of the output shaft 8, and the center axis "W-out" of the swingable output axle 6f passes through the center O of the spherical body 4. The bearing cap 13 is fixed to the center bore of the output shaft 8 via an intervening bearing. Thus, the swingable output axle 6f is rotatably combined with the output shaft 8.

As shown in Fig.13, the stationary output guide block 7 has a center bore made on its top, and a bearing 7b is put in the center bore. The cylindrical projection 8a of the output shaft 8 is press-fitted in the bearing 7b, and the circular skirt 8b of the output shaft 8 abut on the balls 12, which are rotatably fitted in the ball pockets 6e of the ball retainer 6. This arrangement permits the output shaft 8 to rotate at a reduced speed.

The locus of the center of each ball 11 can be determined according to Equations 1 and 2 as follows: first, the initial position of the center of the ball 11 is determined arbitrarily to be $P_3$, and Equations 1 and 2 are rewritten by substituting the center axis "n" of the bearing cap 13, the center axis "W-out" of the swing output axle 6f and the crossing angle $\gamma$ for corresponding variables in these equations as follows:

$$P_0 \Rightarrow P_3$$
$$P_1 \Rightarrow P_4$$
$$P_2 \Rightarrow P_5$$
$$i \Rightarrow n$$
$$\beta \Rightarrow \gamma$$
$$\text{W-in} \Rightarrow \text{W-out}$$
$$\theta \Rightarrow \theta$$

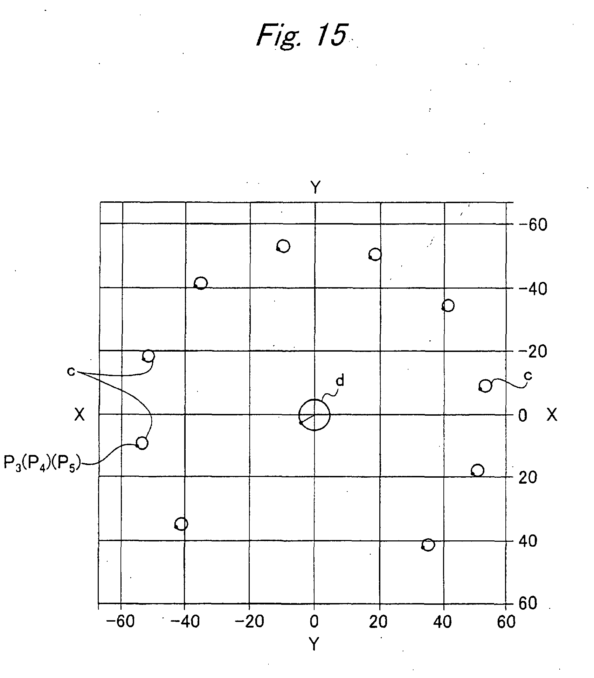

Fig.15 shows the loci "c" of the centers of the balls 11. The locus "d" at the center of the drawing shows how a given point on the swing output axle 6f travels when it is rotated about the center axis "n". The black point on each locus indicates the initial position, which is set at the outset.

The required circulatory grooves 7a and ball pockets 6d can be formed by making a cutting tool of same shape as the ball 11 follow the locus "c" on the concave surface of the stationary output guide block 7 and by making the cutting tool rotate on the output intervenient member 6 respectively. The crossing angle $\gamma$ can be selected in the range of $0° < \gamma \leq 20°$. In this particular example the crossing angle is 5 degrees.

Also, it should be noted that the crossing angle $\beta$ on the input side is equal to or larger than the crossing angle $\gamma$ $(\beta \geq \gamma)$. This requirement should be met for smooth transmission of rotation from the input to output shaft.

Thanks to the balls 9 and 11 the spherical body 4 can swing and rotate without deviating its center O or without spinning about the input or output swing axle 4a or 6f.

The spherical body 4 has ten circular circulatory grooves 4c formed on its upper part for engagement with the ball retainer 6, thereby permitting transmission of swing-and-rotation to the output shaft (see Fig.8). On the other hand, the ball retainer 6 has ball pockets 6b made on its concave surface in the confronting relation with the circulatory grooves 4c formed on the spherical body 4 (see Fig.13).

The spherical balls 10 are rotatably fitted in the ball pockets 6b.

The circulatory grooves 4c, ball pockets 6b and balls 10 work together to transmit the movement from the input shaft 3 to the ball retainer 6 via the spherical body 4. The circulatory grooves 4c are circular, but different in size, working all together to make the ball retainer 6 rotate and swing via the intervening balls 10.

The output swing axle 6f has its center axis "W-out" deviated from the center axis "n" of the bearing cap 13, thereby permitting transmission of the force from the spherical body 4 to the output shaft 8 like the crank motion to rotate the output shaft 8. If a single ball were used, a dead point would appear in the crank motion, and the output shaft 8 would stop at the dead point. To assure the continuous rotation of the output shaft 8 a plurality of balls and associated circulatory grooves are evenly distributed without interfering with each other.

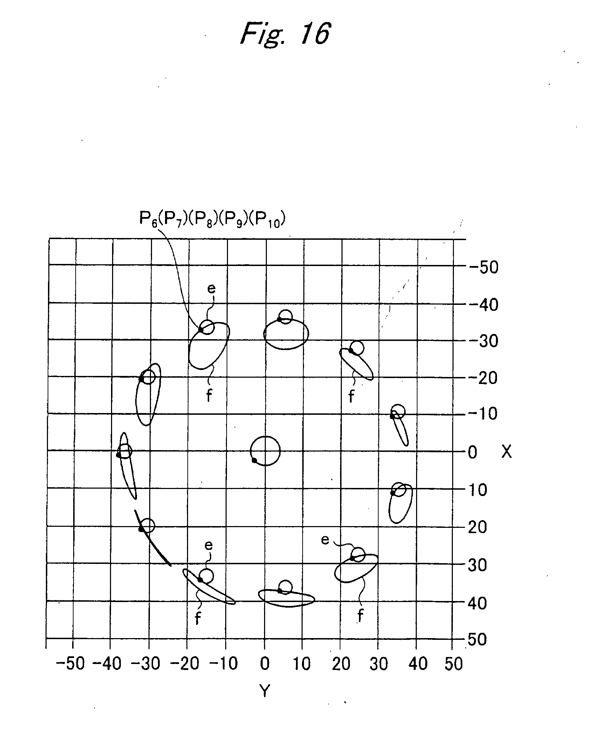

Fig.16 shows the initial positions $P_6$ of the balls 10, which are put in the spaces defined by the circulatory grooves 4c of the spherical body 4 and the ball pockets 6b of the ball retainer 6, and the loci "f" on which the centers of the balls 10 travel in the circulatory grooves 4c. The loci "f" can be determined in the same way as the loci "b" and "c".

First, the initial position of the center of the ball 10 is determined arbitrarily to be $P_6$, and the position of the ball center after rotation θ about the center axis "n" is Position $P_7$, which is coordinate-converted in respect of the center axis "W-out" of the output swing axle 6f to provide Position $P_8$. The locus "e" is circular, and is a virtual, intermediate locus, which does not actually appear in the product.

The circulatory groove 4c can be determined by subtracting the swinging motion of the input shaft 3 from the virtual, intermediate locus "e" to obtain the locus "f" of the center motion. As is described above, Position $P_8$ is coordinate-converted in respect of the center axis "W-in" of the input swing axle 4a to provide Position $P_9$, which is coordinate-converted in respect of the center axis "i" of the input shaft 3 to determine the locus "f".

When the input shaft 3 rotates θ, the input swing axle 4a rotates about the center axis "i" of the input shaft 3 with the center axis "W-in" of the input swing axle 4a passing through the center O of the spherical body 4, so that the spherical body 4 may swing and rotate. Then, the output intervenient member 6 swings and rotates by the agency of the circular grooves 4c, balls 10 and ball pockets 6b.

The manner in which engagement of the circular skirt 8b of the output shaft 8 with the balls 12 of the ball retainer 6 transforms the swinging motion to the rotating motion, thereby rotating the output shaft 8 at a reduced speed.

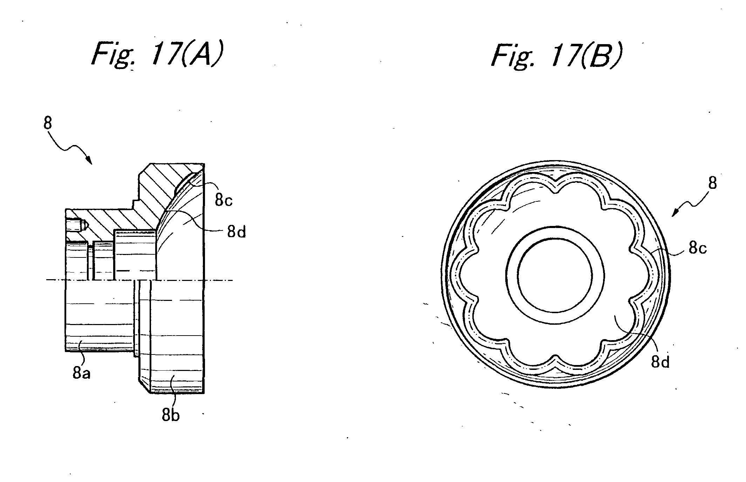

As seen from Fig.17, the circular skirt 8b of the output shaft 8 has a three-dimensional continuous wave-like groove 8c made on its concave surface. The number of the crests of the wave 8c is equal to the reduction ratio (the ratio of the rotation of the output shaft to the rotation of the input shaft). In this example the number of the crests of the wave 8c is equal to 10. Eleven balls 12 are rotatably fitted in the spaces defined by the wave-like groove 8c and the ball pockets 6e.

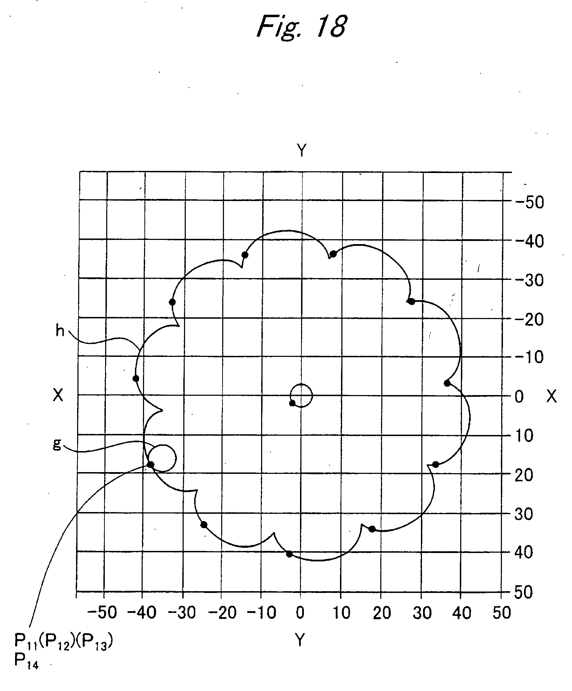

Referring to Fig.18, the initial positions of the balls 12 and the loci "f" of the ball centers in the wave-like groove 8c can be determined as follows: First, the initial position of the center of the ball 12 is determined arbitrarily to be $P_{11}$, and the position of the ball center after rotation θ about the center axis "n" is Position $P_{12}$, which is coordinate-converted in respect of the center axis "W-out" of the output swing axle 6f to provide Position $P_{13}$. The locus "g" is circular, and is a virtual, intermediate locus, which does not actually appear in the product.

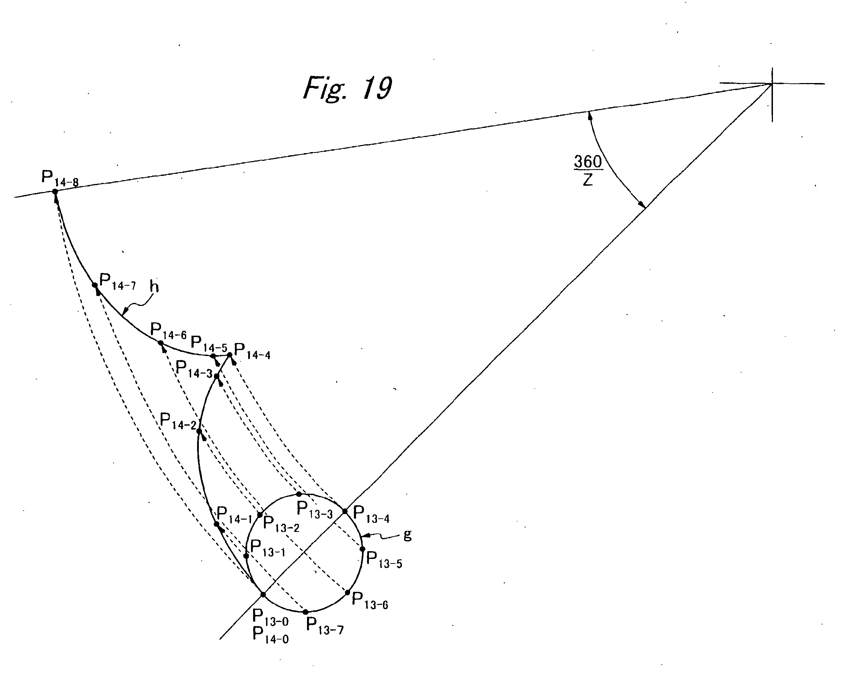

Referring to Fig.19, the loci "h" of the center of the ball 12 in the wavy output groove 8c can be determined from the virtual locus "g" as follows: the initial position $P_{13}$ is coordinate-converted for each angular increment of the output shaft about its center axis "n" in respect of the speed-reduction ratio (i.e. the angular increment of 360 degrees divided by the number of wave crests) to determine $P_{14}$ ($P_{14-8}$). Likewise, coordinate-conversions are effected for each angular increment at each of the selected points on the virtual locus to determine a continuous wavy locus "h".

The output shaft 8 rotates at a reduced speed by allowing the center axis "W-out" of the ball retainer 6 to revolve about the center axis "n" of the output shaft 8, and then, the rotating drive is produced via an output adapter 14, which is fastened to the top of the output shaft 8. No backlash appears in transmitting the rotation from the input to output shaft, thus permitting the output shaft 8 to rotate at the precision reduction ratio.

## Claims

1. A rotatable-and-swingable type of rotary joint device comprising at least

   a casing of the device,
   an input shaft rotatably fixed to the casing of the device,
   a precession spherical body responsive to the rotation of the input shaft for rotating and swinging, and
   an output shaft operatively connected to the precession spherical body for rotating.

2. A rotatable-and-swingable type of rotary joint device according to claim 1,
   wherein it further comprises:

   a stationary input guide block operatively connected to and supporting the precession spherical body,
   a precession output intervenient member operatively connected to the precession spherical body,
   a stationary output guide block operatively connected to and rotatably and swingably supporting the output intervenient member.

3. A rotatable-and-swingable type of rotary joint device according to claim 1 or 2, wherein all of dimensions and variables are do determined that the input and output shafts may have one and same rotation angle in operation.

4. A rotatable-and-swingable type of rotary joint device according to claim 1 or 2, wherein the input and output shafts have their center axes crossing at a crossing angle $\alpha$, where $0° < \alpha \leq 110°$.

5. A rotatable-and-swingable type of rotary joint device according to claim 2, wherein one of the precession output intervenient member and precession spherical body has circulatory grooves made therein, and the other has recesses made therein in confronting relation with the circulatory grooves; and the precession output intervenient member is operatively connected to the precession spherical body by spherical bodies or balls rotating in the space defined between the circulatory grooves and the recesses.

6. A rotatable-and-swingable type of rotary joint device according to claim 2, wherein the input shaft and the input swing axle have their center axes crossing at a crossing angle $\beta$ where $0° < \beta \leq 20°$ whereas the output shaft and the output swing axle have their center axes crossing at a crossing angle $\gamma$ where $0° < \gamma \leq 20°$.

7. A rotatable-and-swingable type of rotary joint device according to claim 6, wherein the crossing angle $\beta$ is equal to or larger than the crossing angle $\gamma$ ($\beta \geq \gamma$).

8. A rotatable-and-swingable type of rotary joint device according to claim 2, wherein the precession spherical body is sandwiched between the stationary input and output guide blocks under pressure.

9. A rotatable-and-swingable type of speed-reduction device comprising:

   a casing of the device,
   an input shaft rotatably fixed to the casing of the device,
   a precession spherical body operatively connected to the input shaft via an associated input swing axle to be responsive to the rotation of the input shaft for rotating and swinging,
   a stationary input guide block operatively connected to and supporting the precession spherical body,

a precession output intervenient member operatively connected to the precession spherical body,
a stationary output guide block fixed to the casing of the device, operatively connected to and rotatably and swingably supporting the output intervenient member, and
an output shaft rotatably supported by the stationary output guide block, and operatively connected to the precession output intervenient member for rotation.

10. A rotatable-and-swingable type of speed-reduction device according to claim 9, wherein the output shaft has a three-dimensional continuous wave-like groove made in its lower surface to confront with counter recesses, which are made in the upper surface of the output intervenient member, thus making the output shaft mesh with the output intervenient member with balls retained between the wave-like groove and the counter recesses.

Fig. 1

EP 1 338 388 A2

Fig. 2(A)

5

5a

Fig. 2(B)

5a

5

Fig. 3

*Fig. 4*

Locus on the stationary input guide block

Locus on the input side of
the spherical body

W-in'

W-in'

i

β

n

O

P1

P2

P0

P1'

P2'

P0'

Locus on the stationary input guide block

Locus on the input side of
the spherical body

Fig. 5(A)

Fig. 5(B)

Fig. 5(C)

Fig. 6(A)    Fig. 6(B)    Fig. 6(C)

## *Fig. 7*

EP 1 338 388 A2

Fig. 8(B)

Fig. 8(A)

16

*Fig. 9*

*Fig. 10(A)*

Semispherical shape

*Fig. 10(B)*

Gothic shape

*Fig. 10(C)*

"V" shape

## Fig. 11

Locus of the ball retainer groove

Virtual locus

Initial position of the ball

*Fig. 12*

$(\alpha = 110°)$

EP 1 338 388 A2

Fig. 13

($\alpha = 90°$)

*Fig. 14(A)*    *Fig. 14(B)*    *Fig. 14(C)*

EP 1 338 388 A2

EP 1 338 388 A2

# Fig. 15

23

## Fig. 16

EP 1 338 388 A2

Fig. 17(A)

Fig. 17(B)

25

*Fig. 18*

Fig. 19

*Fig. 20*